# EUROPÄISCHE PATENTSCHRIFT

(11) **EP 1 385 700 B1**
(45) Veröffentlichungstag und Bekanntmachung des Hinweises auf die Patenterteilung: **27.07.2005**
(21) Anmeldenummer: 02766633.8
(22) Anmeldetag: 19.04.2002
(51) Int. Cl.: B32B 27/28, B32B 27/18

(54) **PLA-FOLIE MIT GUTEN ANTISTATISCHEN EIGENSCHAFTEN**
POLYLACTIC ACID (PLA) FILM HAVING GOOD ANTISTATIC PROPERTIES
FILM D'ACIDE POLYLACTIQUE (PLA) AYANT DE BONNES PROPRIETES ANTISTATIQUES

(30) Priorität: 30.04.2001 DE 10121153
(43) Veröffentlichungstag der Anmeldung: 04.02.2004
(73) Patentinhaber: Treofan Germany GmbH & Co.KG, 66539 Neunkirchen (DE)
(72) Erfinder: ROSENBAUM, Sonja, deceased (DE); HÄDE, Petra, 66117 Saarbrücken (DE); BUSCH, Detlef, 66740 Saarlouis (DE); ROSENBAUM, Marlies, 66539 Bous (DE); ROSENBAUM, Manfred, 66539 Bous (DE)
(86) Internationale Anmeldenummer: PCT/EP2002/004325
(87) Internationale Veröffentlichungsnummer: WO 2002/087877

(56) Entgegenhaltungen:
- EP-A- 0 492 463
- EP-A- 0 802 219

## Beschreibung

Die vorliegende Erfindung betrifft eine biaxial orientierte Folie, die mindestens eine Schicht umfasst, welche mindestens ein Polymeres aus mindestens einer Hydroxycarbonsäure und Glycerinfettsäureester enthält. Die Erfindung betrifft femer ein Verfahren zur Herstellung der Folie sowie ihrer Verwendung.

Folien aus thermoplastischen Kunststoffen werden in großem Umfang zur Verpackung von Lebensmitteln und anderen Packgütem eingesetzt. Für diese Verwendungen ist es wesentlich, daß die Folien gute antistatische und Gleitreibungs-Eigenschaften aufweisen.

Die Aufgabe der vorliegenden Erfindung bestand darin, Folien für umweltfreundliche Verpackungen zur Verfügung zu stellen, welche aus nachwachsenden Rohstoffen hergestellt, umweltfreundlich entsorgt werden können und gute Antistatikeigenschaften aufweisen. Darüber hinaus sind gute Gleiteigenschaften und ein kleiner Reibungskoeffizient wünschenswert. Für bestimmte Anwendungsbereiche sind eine gute Transparenz und hohe Glanzwerte zusätzlich erforderlich.

Die Aufgabe wird gelöst durch eine transparente, biaxial orientierte Folie mit mindestens einer Deckschicht, deren kennzeichnende Merkmale darin bestehen, dass die Deckschicht mindestens ein Polymeres I aus mindestens einer Hydroxycarbonsäure und Glycerinfettsäureester in einer Konzentration von >2 bis 10 Gew.-%, bezogen auf die Deckschicht, enthält.

Erfindungsgemäß ist der Anteil an Glycerinfettsäureester, vorzugsweise, Glycerinmonostearinsäureester (GMS) in der Deckschicht grösser als 2 Gew.- %, bezogen auf das Gewicht der Deckschicht, um gute antistatische Eigenschaften zu erzielen. Ist der Glycerinfettsäureester (nachstehend GFS genannt) -Gehalt andererseits größer als 10 Gew.-%, kommt es zu nachteiligem Einfluß auf die optischen Eigenschaften der Folie, ohne daß eine weitere verbessemde Wirkung auf die antistatischen Eigenschaften erzielt wird.

Es wurde gefunden, daß die Einarbeitung des GFS in die Deckschicht wesentlich für die antistatischen Eigenschaften der Folie ist. Überraschenderweise verbessert die Einarbeitung der gleichen Komponente in die Basisschicht aus PHC-Rohstoffen die Antistatik der Folie nicht spürbar. Es ist daher bevorzugt der Basisschicht kein Glycerinfettsäureester zuzusetzen, wenngleich geringe Menge, beispielsweise über Rgeneratzugaben nicht stören. Es wird vermutet, daß in einer PLA-Folie keine Migrationsprozesse auftreten, wie man sie von vergleichbaren polyolefinischen Folien, wie z.B. Polypropylen- oder Polyethylenfolien kennt Diese Schlußfolgerung wird auch durch Untersuchungen an Folien mit vergleichsweise kleinen GFS-Gehalten in der Deckschicht gestützt. Auch bei solchen nicht erfindungsgemäßen Ausführungsformen konnte keine Wirkung von GFS auf die Antistatik der Folie festgestellt werden.

Darüber hinaus wurden eine Reihe von Antistatika untersucht, welche teilweise bei bekannten Polyesterfolien aus aromatischen Polyestem wie, z.B. Polyethylenterephthalatfolien oder auch in Polyolefinfolien eingesetzt werden. Hierbei zeigte sich, daß diese Lehren nicht auf Folien aus PLA übertragen werden können. Dies hängt vermutlich mit den unterschiedlichen Rohstoffeigenschaften und dem unterschiedlichen Migrationsverhalten zusammen. Überraschenderweise zeigt GFS in einer Deckschicht aus einem Polymeren aus mindestens einer Hydroxycarbonsäure bei vergleichsweise hohen Konzentrationen von mindestens 2 Gew.-% die gewünschte Wirkung, obgleich sich andere bekannte Antistatika als völlig untauglich erwiesen.

Geeignete Antistatika sind Glycerinfettsäureester, bei denen eine, zwei oder alle drei Alkoholfunktionen mit einer Fettsäure verestert sind. Bevorzugt sind Monoester, bei welchen nur eine Alkoholgruppe des Glycerins mit einer Fettsäure verestert ist, sogenannte Gtycerinmonofettsäureester. Geeignete Fettsäuren dieser Verbindungen haben eine Kettenlänge von 12 bis 20 C-Atomen. Bevorzugt sind Stearinsäure, Laurinsäure oder Ölsäure. Als besonders vorteilhaft hat sich Glycerinmonostearat (GMS) erwiesen.

Die bevorzugte Konzentration der Glycerinfettsäureester, vorzugsweise GMS beträgt 2,0 bis 8 Gew.-% insbesondere 3 -6 Gew.-% in der Deckschicht. Die Dicke der Deckschicht liegt im allgemeinen in einem Bereich von 0,5 bis 10 µm, vorzugsweise 1 bis 8µm, insbesondere 2 bis 6µm.

Die antistatisch ausgerüstet Deckschicht enthält 80 bis < 98 Gew.-%, vorzugsweise 85 bis < 98 Gew.-% eines Polymeren aus mindestens einer Hydroxycarbonsäuren, nachstehend PHC (Polyhydroxycarbonsäuren) genannt. Hierunter sind Homopolymere oder Mischpolymerisate zu verstehen, welche aus polymerisierten Einheiten von, vorzugsweise aliphatischen, Hydroxycarbonsäuren aufgebaut sind. Unter den für die vorliegende Erfindung geeigneten PHC sind insbesondere Polymilchsäuren geeignete. Diese werden nachstehend als PLA (Polylactidacid) bezeichnet. Auch hier sind unter dem Begriff PLA sowohl Homopolymere, welche nur aus Milchsäureeinheiten aufgebaut sind, als auch Mischpolymerisate zu verstehen, welche überwiegend Milchsäureeinheiten (>50%) in Verbindungen mit anderen aliphatischen Hydroxymilchsäureeinheiten enthalten.

Als Monomere der aliphatischen Polyhydroxycarbonsäure (PHC) sind insbesondere aliphatische Mono-, Di- oder Trihydroxycarbonsäuren, bzw. deren dimere cyclische Ester geeignet, worunter Milchsäure in ihrer D- oder L-Form bevorzugt ist. Ein geeignetes PLA ist beispielsweise Polymilchsäure der Fa. Cargill Dow (NatureWorks®). Die Herstellung von Polymilchsäure ist im Stand der Technik bekannt und erfolgt über katalytische Ringöffnungspolymerisation von Lactid (1,4-Dioxan-3,6-dimethyl2,5-dion), dem dimeren cyclischen Ester der Milchsäure, daher wird PLA häufig auch als Polylactid bezeichnet. In den folgenden Veröffentlichungen ist die Herstellung von PLA beschrieben US 5,208,297, US 5,247,058 oder US 5,357,035.

Geeignet sind Polymilchsäuren, welche ausschließlich aus Milchsäureeinheiten aufgebaut sind. Hierbei sind insbesondere PLA Homopolymere bevorzugt, welche 80- 100 Gew.-% L-Milchsäureeinheiten, entsprechend 0 bis 20 Gew.-% D-Milchsäureeinheiten, enthalten. Zur Verringerung der Kristallinität können auch noch höhere Konzentrationen D-Milchsäureeinheiten als Comonomer enthalten sein. Gegebenenfalls kann die Polymilchsäure zusätzlich von der Milchsäure verschiedene aliphatische Polyhydroxycarbonsäureeinheiten als Comonomer aufweisen, beispielsweise Glycolsäureeinheiten, 3-Hydroxypropansäureeinhaiten, 2,2-Dimethyl-3-hydroxypropansäureeinheiten oder höhere Homologe der Hydroxycarbonsäuren mit bis zu 5 Kohlenstoffatomen.

Bevorzugt sind Milchsäurepolymere (PLA) mit einem Schmelzpunkt von 110 bis 170°C, vorzugsweise von 125 bis 165°C, und einen Schmelzflußindex (Messung DIN 53 735 bei 2,16 N Belastung und 190°C) von 1 bis 50g/10 min, vorzugsweise von 1 bis 30 g/10 min. Das Molekulargewicht des PLA liegt in einem Bereich von mindestens 10.000 bis 500.000 (Zahlenmittel), vorzugsweise 50.000 bis 300.000 (Zahlenmittel). Die Glasübergangstemperatur Tg liegt in einem Bereich von 40 bis 100°C, vorzugsweise 40 bis 80°C.

Die erfindungsgemässe Folie ist mehrschichtig aufgebaut und umfaßt mindestens die Basisschicht und eine antistatisch ausgerüstete Deckschicht aus PHC und Glycerinfettsäureester. Gegebenenfalls kann auf der gegenüberliegenden Seite der Folie eine weitere Deckschicht aufgebracht sein, wobei diese Deckschicht ebenfalls antistatisch mit GFS oder unausgerüstet sein kann. Des weiteren ist es möglich zwischen der Basisschicht und der oder den Deckschichten zusätzlich eine oder beidseitig Zwischenschichten anzubringen, wodurch vier oder fünfschichtige Folien erhalten werden.

Die Basisschicht ist im Sinne der vorliegenden Erfindung diejenige Schicht, welche die größte Schichtdicke aufweist und im allgemeinen mehr als 40 % bis 98 %, vorzugsweise 50 bis 90 %, der Gesamtfoliendicke ausmacht. Die Deckschichten sind die Schichten, welche die äusseren Schichten der Folie bilden. Zwischenschichten sind naturgemäß zwischen der Basisschicht und den Deckschichten angebracht.

Unter transparenten Folien werden im Sinne der vorliegenden Erfindung solche Folien verstanden, deren Lichtdurchlässigkeit nach ASTM-D 1003-77 über 95 %, vorzugsweise über 75 %, liegt. Es wurde gefunden, daß die Einarbeitung der hohen Konzentrationen an GFS in die Deckschicht die Trübung der Folie nicht erhöht. Auch in dieser Hinsicht hat sich die Auswahl von GFS als antistatische Ausrüstung in der Deckschicht als überraschend vorteilhaft erwiesen.

Die Basischicht der Folie enthält im allgemeinen mindestens 90 bis <100 Gew.-%, vorzugsweise 95 bis 99 Gew. -%, bezogen auf das Gewicht der Schicht, Polymere aus mindestens einer Hydroxycarbonsäuren, nachstehend PHC (Polyhydroxycarbonsäuren) genannt. Hierunter sind Homopolymere oder Mischpolymerisate zu verstehen, welche aus polymerisierten Einheiten von, vorzugsweise aliphatischen, Hydroxycarbonsäuren aufgebaut sind. Unter den für die Basisschicht geeigneten PHC sind insbesondere Polymilchsäuren geeignete, darunter sowohl Homopolymere, welche nur aus Milchsäureeinheiten aufgebaut sind, als auch Mischpolymerisate, welche überwiegend Milchsäureeinheiten (>50%) in Verbindungen mit anderen aliphatischen Hydroxymilchsäureeinheiten enthalten.

Als Monomere der aliphatischen Potyhydroxycarbonsäure (PHC) sind insbesondere aliphatische Mono-, Di- oder Trihydroxycarbonsäuren, bzw. deren dimere cyclische Ester geeignet, worunter Milchsäure in ihrer D- oder L-Form bevorzugt ist. Ein geeignetes PLA ist beispielsweise Polymilchsäure der Fa. Cargill Dow (NatureWorks®). Die Herstellung von Polymilchsäure ist im Stand der Technik bekannt und erfolgt über katalytische Ringöffnungspolymerisation von Lactid (1,4-Dioxan-3,6-dimethyl2,5-dion), dem dimeren cyclischen Ester der Milchsäure, daher wird PLA häufig auch als Polylactid bezeichnet In den folgenden Veröffentlichungen ist die Herstellung von PLA beschrieben US 5,208,297, US 5,247,058 oder US 5,357,035.

Bevorzugt sind Polymilchsäuren, welche ausschließlich aus Milchsäureeinheiten aufgebaut sind. Hierbei sind insbesondere PLA Homopolymere bevorzugt, welche 80-100 Gew.-% L-Milchsäureeinheiten, entsprechend 0 bis 20 Gew.-% D-Milchsäureeinheiten, enthalten. Zur Verringerung der Kristallinität können auch noch höhere Konzentrationen D-Milchsäureeinheiten als Comonomer enthalten sein. Gegebenenfalls kann die Polymilchsäure zusätzlich von der Milchsäure verschiedene aliphatische Polyhydroxycarbonsäureeinheiten als Comonomer aufweisen, beispielsweise Glycolsäureeinheiten, 3-Hydroxypropansäureeinhaiten, 2,2-Dimethyl-3-hydroxypropansäureeinheiten oder höhere Homologe der Hydroxycarbonsäuren mit bis zu 5 Kohlenstoffatomen.

Bevorzugt sind Milchsäurepolymere (PLA) mit einem Schmelzpunkt von 110 bis 170°C, vorzugsweise von 125 bis 165°C, und einen Schmelzflußindex (Messung DIN 53 735 bei 2,16 N Belastung und 190°C) von 1 bis 50g/10 min, vorzugsweise von 1 bis 30 g/10 min. Das Molekulargewicht des PLA liegt in einem Bereich von mindestens 10.000 bis 500.000 (Zahlenmittel), vorzugsweise 50.000 bis 300.000 (Zahlenmittel). Die Glasübergangstemperatur Tg liegt in einem Bereich von 40 bis 100°C, vorzugsweise 40 bis 80°C.

Die Basisschicht sowie die übrigen Schichten der Folie, einschließlich der antistatisch ausgerüsteten Deckschicht können zusätzlich übliche Additive, wie Neutralisationsmittel, Stabilisatoren, Antiblockmittel, Gleitmittel und Füllstoffe, enthalten. Sie werden zweckmässig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Titandioxid, Kaolin oder vemetzte Polymerpartikel, z.B. Polystyrol- oder Acrylat-Partikel. Die Antiblockmittel werden vorzugsweise der oder den Deckschichten zugesetzt.

Gegebenenfalls können auch Mischungen von zwei und mehreren verschiedenen Antiblockmitteln oder Mischungen von Antiblockmitteln gleicher Zusammensetzung, aber unterschiedlicher Partikelgrösse gewählt werden. Die Partikel können den Polymeren der einzelnen Schichten der Folie in den jeweils vorteilhaften Konzentrationen direkt oder über Masterbatche bei der Extrusion zugegeben werden. Als besonders geeignet haben sich Antiblockmittel-Konzentrationen von 0 bis 10 Gew.-% erwiesen (bezogen auf das Gewicht der jeweiligen Schicht). Eine detaillierte Beschreibung der Antiblockmittel findet sich beispielsweise in der EP-A-0 602 964.

Die Gesamtdicke der Folie kann innerhalb weiter Grenzen variieren und richtet sich nach dem beabsichtigten Verwendungszweck. Die bevorzugten Ausführungsformen der erfindungsgemässen Folie haben Gesamtdicken von 4 bis 200 µm, wobei 8 bis 150 µm, insbesondere 10 bis 100 µm, bevorzugt sind. Die Dicke der gegebenenfalls vorhandenen Zwischenschicht/en beträgt im allgemeinen jeweils unabhängig voneinander 0,5 bis 15 µm, wobei Zwischenschichtdicken von 1 bis 10 µm, insbesondere 1 bis 8 µm, bevorzugt sind. Die angegebenen Werte beziehen sich jeweils auf eine Zwischenschicht. Die Dicke der zweiten Deckschicht/en wird unabhängig von den anderen Schichten gewählt und liegt bevorzugt im Bereich von 0,1 bis 5 µm, insbesondere 0,2 bis 3 µm, wobei die zweite Deckschichten bezüglich Dicke und Zusammensetzung verschieden von der ersten Deckschicht sein kann. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Die Erfindung betrifft weiterhin ein Verfahren zur Herstellung der erfindungsgemässen mehrschichtigen Folie nach dem an sich bekannten Extrusions- oder Koextrusionsverfahren.

Im Rahmen dieses Verfahrens wird so vorgegangen, dass die den Schichten der Folie entsprechende Schmelze/n durch eine Flachdüse koextrudiert werden, die so erhaltene mehrschichtige Folie zur Verfestigung auf einer oder mehreren Walze/n abgezogen wird, die Folie anschliessend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Verstreckung wird im allgemeinen sequentiell durchgeführt. Dabei wird vorzugsweise erst in Längsrichtung (d.h. in Maschinenrichtung, =MD-Richtung) und anschliessend in Querrichtung (d.h. senkrecht zur Maschinenrichtung, =TD-Richtung) verstreckt. Dies führt zu einer Orientierung der Molekülketten. Das Verstrecken in Längsrichtung erfolgt bevorzugt mit Hilfe zweier entsprechend dem angestrebten Streckverhältnis verschieden schnell laufenden Walzen. Zum Querverstrecken benutzt man allgemein einen entsprechenden Kluppenrahmen. Die weitere Beschreibung der Folienherstellung erfolgt am Beispiel einer Flachfolienextrusion mit anschließender sequentialer Streckung.

Die Schmelze/n werden durch eine Flachdüse (Breitschlitzdüse) gepreßt, und die ausgepreßte Folie wird auf einer oder mehreren Abzugswalzen bei einer Temperatur von 10 bis 100°C, vorzugsweise 20 bis 80°C, abgezogen, wobei sie abkühlt und sich verfestigt.

Die so erhaltene Folie wird dann längs und quer zur Extrusionsrichtung gestreckt. Das Längsstrecken wird man vorzugsweise bei einer Temperatur von 40 bis 150°C, vorzugsweise 60 bis 120°C zweckmäßigerweise mit Hilfe zweier entsprechend dem angestrebten Streckverhältnis verschieden schnell laufender Walzen durchführen und das Querstrecken vorzugsweise bei einer Temperatur von 50 bis 150°C, vorzugsweise 70 bis 120°C mit Hilfe eines entsprechenden buppenrahmens. Die Längsstredcverhältnisse können Bereich von 1,5 bis 8 variiert werden. Bei der Herstellung von Folien mit COChaltiger Basisschicht ist ein höheres Längsstreckverhältnis von 3 bis 6 bevorzugt, wohingegen Folien mit einer transparenten Basisschicht vorzugsweise im Bereich von 1,5 bis 3,5 verstreckt werden. Die Querstreckverhältnisse liegen im Bereich von 3 bis 10, vorzugsweise 4 bis 7.

An die Streckung der Folie schließt sich ihre Thermofixierung (Wärmebehandlung) an, wobei die Folie etwa 0,1 bis 10 s lang bei einer Temperatur von 60 bis 150°C gehalten wird. Anschließend wird die Folie in üblicher Weise mit einer Aufwickeleinrichtung aufgewickelt.

Es hat sich als besonders vorteilhaft erwiesen den Gycerinfettsäureester über ein Konzentrat in die Deckschicht der Folie einzuarbeiten. Es wurde gefunden, daß die Verteilung Der Ester in der Deckschicht gleichmäßiger ist und die antistatischen Eigenschaften insgesamt besser sind als bei einer direkten Einarbeitung. Die Konzentrate können auf vergleichbaren Milchsäurepolymeren basieren. Gegebenenfalls ist auch der Einsatz von Mischungen aus Polyolefinen wie Polypropylen oder Polyethylen und GFS möglich, welche GFS in einer Menge von 20 bis 60 Gew.-% bezogen auf das Batch enthalten.

Gegebenenfalls kann zur Einstellung weiterer Eigenschaften die Folie beschichtet werden. Typische Beschichtungen sind haftvermittelnde, schlupfverbessemd oder dehäsiv wirkende Schichten. Gegebenenfalls können diese zusätzlichen Schichten über in-line coating mittels wässriger Dispersionen vor der Querverstreckung oder off-line aufgetragen werden.

Die erfindungsgemässe Folie zeichnet sich durch sehr gute antistatische Eigenschaften aus. Hierdurch ist ein gute Handhabung der Folie beim Herstellen, Wickeln und Verarbeiten möglich. Daneben weisen transparente Ausführungsformen der erfindungsgemäßen Folie eine sehr gute Transparenz auf, welche durch den Zusatz der großen Mengen an GFS in der Deckschicht überraschenderweise nicht beeinträchtigt wird. Zusätzlich zeigt sich, daß es bei der Herstellung der Folie nicht zu Problemen durch Ablagerungen oder Ausdampfungen des antistatischen Additivs kommt. Derartige Probleme sind beispielsweise beim Einsatz von GMS in Polypropylenfolien bekannt. Sie treten beim dem erfindungsgemäßen Herstellprozeß nicht auf. Zusätzlich zeigte sich, daß sich, daß die Folie die guten antistatischen Eigenschaften bereits unmittelbar nach der Herstellung aufweisen und zeitlich stabil bleiben. Auch dies ist ein klarer Vorteil gegenüber Folien deren Antistatik sich erst nach dem Ablauf von Migrationsvorgängen einstellt. Es wurde gefunden, daß durch den Zusatz von GMS der spezifische Oberflächenwiderstand der Folie, gegenüber dem entsprechenden spezifische Oberflächenwiderstand von PLA, reduziert wird. Der spezifische Oberflächenwiderstand liegt erfindungsgemäß unterhalb von 10¹² Ω/m. Des weiteren zeigt die Folie eine gute, d.h. niedrige Gleitreibung, wodurch die Lauf- und Verarbeitungseigenschaften zusätzlich günstig beeinflußt werden.

Zur Charakterisierung der Rohstoffe und der Folien wurden die folgenden Messwerte benutzt:
Antistatik: Messung des Oberflächenwiderstandes gemäß DIN 53482, sowie die elektrische Aufladbarkeit nach DIN 57303

### Lichtdurchlässigkeit

Die Lichtdurchlässigkeit wird in Anlehnung an ASTM-D 1033-77 gemessen.

Die Erfindung wird nachstehend an Hand von Ausführungsbeispielen erläutert

### Beispiel 1:

Es wurde durch Extrusion und anschließende stufenweise Orientierung in Längs- und Querrichtung eine transparente dreischichtige PLA-Folie mit einer Dicke von etwa 20 µm hergestellt. Die Basisschicht bestand zu nahezu 100 Gew.-% aus einer Polymilchsäure mit einem Schmelzpunkt von etwa 60 °C. Die Schicht enthielt zusätzlich Stabilisatoren und Neutralisationsmittel in üblichen Mengen. Die Deckschichten, deren Dicke etwa 2 µm betrugt, enthielt neben PLA 2 Gew% GMS als Additiv. Die Herstellbedingungen in den einzelnen Verfahrensschritten waren:

| | | |
|---|---|---|
| Extrusion | Temperaturen | 170 - 200°C |
| | Temperatur der Abzugswalze | 60°C |
| Längsstreckung | Temperatur | 68 °C |
| | Längsstreckverhältnis | 2,0 |
| Querstreckung | Temperatur | 88 °C |
| | Querstreckverhältnis (effektiv) | 5,5 |
| Fixierung | Temperatur | 75 °C |
| | Konvergenz | 5 % |

Auf diese Weise wurde eine transparente Folie mit charakteristischem Glanz und einem reduzierten spezifischen Oberflächenwiderstand von ca. 3*10¹² Ω/m² und einem COF von 0,25 erhalten.

### Beispiel 2:

Es wurde eine dreischichtige Folie wie in Beispiel 1 beschrieben, jedoch mit einer Dicke von 30µm hergestellt. Dabei wurde der Gehalt an GMS in der Deckschicht auf ca. 2,5 Gew.-%, bezogen auf die Deckschicht, erhöht. Auf diese Weise wurde ebenfalls eine transparente Folie mit charakteristischem Glanz, einem reduzierten spezifische Oberflächenwiderstand und verbessertem Gleitreibungskoeffizient (COF = 0,3) erhalten.

### Vergleichsbeispiel 1 (Folie ohne GMS)

Es wurde eine Folie wie in Beispiel 1 beschrieben hergestellt. Im Unterschied zu Beispiel 1 enthielt die Folie kein GMS in den Deckschichten und bestand zu ca. 100 Gew.-% aus PLA Diese Folie zeigte weder gute antistatische Eigenschaften (spezifischer Oberflächenwiderstand < 10¹⁴ Ω/m²), noch einen verbesserten Gleitreibungskoeffizient (COF = 0,55).

### Vergleichsbeispiel 2 (Folie mit weniger als 2 Gew% GMS)

Es wurde eine Folie wie in Beispiel 1 beschrieben hergestellt. Im Unterschied zu Beispiel 1 enthielt die Folie nur 1,5 Gew% GMS in einer Deckschicht und zeigte ebenfalls schlechte antistatische Eigenschaften. Der Gleitreibungskoeffizient ist gegenüber der Folie ohne GMS nur unbedeutend geringer (COF = 0,5).

### Vergleichsbeispiel 3 (Folie mit anderem Antistatikum)

Es wurde eine Folie wie in Beispiel 1 beschrieben hergestellt. Im Unterschied zu Beispiel 1 enthielt die Folie als Antistatikum 2 Gew.-%, bezogen auf das Gewicht der Deckschicht, eines tertiäres aliphatischen Amins (Armostat 300). Wie in Vergleichsbeispiel 1 konnte durch den Einsatz dieses Additiv, selbst bei Erhöhungen der Konzentration auf bis zu 5 Gew.-% in der Deckschicht im Bereich von bis zu 5 Gew.-% keine Wirkung auf die antistatische Eigenschaften oder eine Verringerung der Gleitreibung erzielt werden.

## Patentansprüche

1. Mehrschichtige biaxial orientierte Folie aus einer Basisschicht und mindestens einer Deckschicht, **dadurch gekennzeichnet, daß** die Deckschicht mindestens ein Polymeres aus mindestens einer Hydroxycarbonsäure und 2 bis 10 Gew.-% eines Glycerinfettsäureesters GFS enthält.

2. Folie nach Anspruch 1, **dadurch gekennzeichnet**, der Gehalt an GFS Glycerinfettsäureester 2 bis 8 Gew.-% bezogen aus das Gewicht der Deckschicht beträgt.

3. Folien nach einem oder mehreren der Ansprüche 1 bis 2, **dadurch gekennzeichnet, daß** die Dicke der Deckschicht 0,5 bis 10 µm beträgt.

4. Folien nach einem oder mehreren der Ansprüche 1 bis 2, **dadurch gekennzeichnet, daß** die Deckschicht 80 bis <98 Gew.-% eines Polymeren aus aliphatischer Hydroxycarbonsäure enthält

5. Folie nach Anspruch 4, dadaurch **gekennzeichnet**, daß die aliphatische Hydroxycarbonsäure ein PLA Polylactic acid, Polymilchsäure ist.

6. Folie nach einem oder mehreren der Ansprüche 1 bis 5 , **dadurch gekennzeichnet, daß** der Glycerinfettsäureester ein Glycerinmono-, ein Glycerindi- oder ein Glycerintricarbonsäureester ist.

7. Folie nach Anspruch 6, **dadurch gekennzeichnet, daß** die Fettsäure des Glycerinfettsäureesters eine Stearinsäure ist

8. Folie nach einem oder mehreren der Ansprüche 1 bis 7, **dadurch gekennzeichnet, daß** die Basisschicht transparent ist und 90 bis <100Gew.-% einer Polyhydroxycarbonsäure, vorzugsweise PLA Polylactic acid, Polymilchsäure enthält.

9. Folie nach einem oder mehreren der Ansprüche 1 bis 7, **dadurch gekennzeichnet, daß** die Basisschicht opak ist und zusätzlich eine opazifizierende Menge eines COC enthält.

10. Verwendung einer Folie nach einem oder mehreren der Ansprüche 1 bis 9 als Verpackungsfolie.

11. Verfahren zur Herstellung einer Folie nach Anspruch 1, **dadurch gekennzeichnet, daß** den Glycerinfettsäureester über ein Konzentrat in die Deckschicht einarbeitet.

## Claims

1. A multilayered biaxially oriented film made of a base layer and at least one surface layer, **characterized in that** the surface layer contains at least one polymer made of at least one hydroxycarboxylic acid and 2 to 10 weight-percent of a glycerin fatty acid ester, GFS.

2. The film according to claim 1, **characterized in that** the content of GFS, glycerin fatty acid ester, is 2 to 8 weight-percent in relation to the weight of the surface layer.

3. The films according to one or more of claims 1 through 2, **characterized in that** the thickness of the surface layer is 0.5 to 10 µm.

4. The films according to one or more of claims 1 through 2, **characterized in that** the surface layer contains 80 to <98 weight-percent of a polymer made of aliphatic hydroxycarboxylic acid.

5. The film according to claim 4, **characterized in that** the aliphatic hydroxycarboxylic acid is a PLA, polylactic acid.

6. The film according to one or more of claims 1 through 5, **characterized in that** the glycerin fatty acid ester is a glycerin monocarboxylic acid, a glycerin dicarboxylic acid, or a glycerin tricarboxylic acid.

7. The film according to claim 6, **characterized in that** the fatty acid of the glycerin fatty acid ester is a stearic acid.

8. The film according to one or more of claims 1 through 7, **characterized in that** the base layer is transparent and contains 90 to <100 weight-percent of a polyhydroxycarboxylic acid, preferably PLA, polylactic acid.

9. The film according to one or more of claims 1 through 7, **characterized in that** the base layer is opaque and additionally contains an opacifying quantity of a COC.

10. A use of a film according to one or more of claims 1 through 9 as a packaging film.

11. A method for manufacturing a film according to claim 1, **characterized in that** the glycerin fatty acid is incorporated into the surface layer via a concentrate.

## Revendications

1. Feuille multicouches orientée de manière biaxiale composée d'une couche de base et d'au moins une couche de recouvrement, **caractérisée en ce que** la couche de recouvrement contient au moins un polymère constitué d'au moins un acide hydroxycarboxylique et de 2 à 10 % en poids d'un ester d'acide gras de glycérine, GFS.

2. Feuille selon la revendication 1, **caractérisée en ce que** la teneur en GFS, ester d'acide gras de glycérine, est de 2 à 8 % en poids par rapport au poids de la couche de recouvrement.

3. Feuilles selon l'une quelconque ou plusieurs des revendications 1 à 2, **caractérisées en ce que** l'épaisseur de la couche de recouvrement est de 0,5 à 10 µm.

4. Feuilles selon l'une quelconque ou plusieurs des revendications 1 à 2, **caractérisées en ce que** la couche de recouvrement contient de 80 à <98 % en poids d'un polymère constitué d'un acide hydroxycarboxylique aliphatique.

5. Feuille selon la revendication 4, **caractérisée en ce que** l'acide hydroxycarboxylique aliphatique est un PLA, acide polylactique.

6. Feuille selon l'une quelconque ou plusieurs des revendications 1 à 5, **caractérisée en ce que** l'ester d'acide gras de glycérine est un ester d'acide mono-, di- ou tricarboxylique de glycérine.

7. Feuille selon la revendication 6, **caractérisée en ce que** l'acide gras de l'ester d'acide gras de glycérine est un acide stéarique.

8. Feuille selon l'une quelconque ou plusieurs des revendications 1 à 7, **caractérisée en ce que** la couche de base est transparente et contient de 90 à <100 % en poids d'un acide polyhydroxycarboxylique, de préférence de PLA, acide polylactique.

9. Feuille selon l'une quelconque ou plusieurs des revendications 1 à 7, **caractérisée en ce que** la couche de base est opaque et contient en outre une quantité opacifiante d'un COC.

10. Utilisation d'une feuille selon l'une quelconque ou plusieurs des revendications 1 à 9 en tant que feuille d'emballage.

11. Procédé de fabrication d'une feuille selon la revendication 1, **caractérisé en ce que** l'ester d'acide gras de glycérine est incorporé par l'intermédiaire d'un concentré dans la couche de recouvrement.
